# FASCICULE DE BREVET EUROPEEN

(11) **EP 0 669 489 B1**
(45) Date de publication et mention de la délivrance du brevet: **07.05.1997**
(21) Numéro de dépôt: 95420047.3
(22) Date de dépôt: 28.02.1995
(51) Int. Cl.: F16L 11/10

(54) **Conduit flexible renforcé**
Verstärkter Schlauch
Reinforced hose

(30) Priorité: 28.02.1994 FR 9402561
(43) Date de publication de la demande: 30.08.1995
(73) Titulaire: TUBEST, F-02130 Fere en Tardenois (FR)
(72) Inventeur: Briand, Gérard, F-02130 Fresnes en Tardenois (FR); Maingre, Dominique, F-02200 Vauxrezis (FR); Le Foll, Marcel, F-02200 Pasly (FR); Valtre, Daniel, F-02200 Soissons (FR)
(74) Mandataire: Guerre, Dominique

(56) Documents cités:
- EP-A- 0 465 837
- FR-A- 1 521 729
- US-A- 4 420 018

## Description

La présente invention concerne un conduit flexible renforcé, tel qu'utilisé pour le transport de fluides, liquides ou gazeux, notamment sous pression.

Plus précisément, l'invention s'intéresse aux conduits flexibles renforcés comprenant un tuyau flexible étanche et un tube coaxial de renfort, constitué par une tresse tubulaire de fuseaux de fils, notamment métalliques. De manière générale, cette dernière comporte un entrelas de mèches plates enroulées en hélice autour de l'axe du tuyau flexible, chaque mèche plate comprenant de manière rassemblée une pluralité de fils métalliques côte à côte. Dans les conduits flexibles considérés par la présente invention, le tube de renfort est assemblé par rapport au tuyau flexible étanche, de manière à disposer d'une liberté de déplacement radial par rapport audit tuyau.

Le nombre de fuseaux ou mèches plates du tube ou tresse tubulaire de renfort, dépend du procédé ou de la machine de tressage utilisée. Et le nombre de fils métalliques de chaque mèche plate, le diamètre et la résistance des fils métalliques la composant, ainsi que l'angle de tressage ou d'entrecroisement des mèches plates les unes par rapport aux autres, sont choisis en fonction des performances finales attendues pour le tube coaxial de renfort.

Les fils des mèches plates du tube coaxial ou tresse de renfort peuvent être en différents matériaux métalliques, tels qu'acier, acier inoxydable, cuivre ou alliage cuivreux, aluminium, mais aussi en matériaux textiles naturels ou de synthèse, présentant de bonnes propriétés ou résistance mécanique.

Un conduit flexible tel que défini précédemment, permet de façon générale de transporter des fluides, en permettant un mouvement relatif entre l'entrée et la sortie dudit conduit, selon un tracé qui peut ne pas être linéaire.

Lorsque le tube coaxial de renfort, ou tresse, est disposé à l'extérieur du tuyau flexible étanche, ceci apporte les fonctions suivantes :
- protection du tuyau flexible étanche contre les chocs extérieurs
- résistance à l'éclatement du tuyau flexible étanche, lors de sa mise sous pression interne
- maintien de la géométrie extérieure du conduit flexible
- amortissement des éventuelles vibrations du tuyau flexible étanche, interne
- filtration des éventuelles émissions sonores provenant de l'intérieur du tuyau flexible étanche.

Lorsque le tube coaxial de renfort, ou tresse, est disposé à l'intérieur du tuyau flexible étanche, ceci apporte les fonctions suivantes :
- comme précédemment, amortissement des éventuelles vibrations, et filtration des éventuelles émissions sonores, provenant de l'intérieur du tuyau flexible étanche
- guidage du fluide transporté par le tuyau flexible étanche, pour limiter les pertes de charge, mais aussi pour éviter la génération de phénomènes, sonores ou vibratoires, du fait du contact entre le fluide transporté par le tuyau flexible étanche, et ce dernier.

Lorsque le tube coaxial de renfort, ou tresse, est mis en oeuvre à l'intérieur du tuyau flexible étanche, son diamètre intérieur est susceptible de diminuer, sous l'effet du débit du fluide transporté, et du fait de l'allongement du tuyau flexible d'une part, et de la température du fluide transporté, entraînant l'allongement des fils métalliques constitutifs de la tresse, et la perte de leurs caractéristiques mécaniques, d'autre part. Sous l'effet combiné de ces différents phénomènes, on peut atteindre une obturation partielle ou totale du passage interne du tuyau flexible étanche.

La présente invention a pour objet, de manière générale, d'améliorer les performances mécaniques du tube coaxial de renfort, ou tresse, aussi bien pour une utilisation à l'intérieur du tuyau flexible étanche, qu'à l'extérieur du même tuyau.

Conformément à la présente invention, l'entrelas du tube coaxial de renfort comprend des lames métalliques substituées à une partie des mèches plates, distinctes des fils individuels desdites mèches, enroulées individuellement en hélice autour de l'axe du tube de renfort, et donc du tuyau flexible étanche, entrecroisées et tressées avec les mèches plates restantes.

Par "lame métallique", on entend toute bande relativement étroite, et relativement peu épaisse d'un matériau métallique, de type feuillard ou méplat, et dont l'épaisseur est plusieurs fois inférieure à sa largeur.

En pratique, les lames métalliques selon l'invention peuvent être substituées à au moins une partie des mèches plates du tube de renfort, et être tressées avec lesdites mèches ; aussi ont-elles préférentiellement des dimensions extérieures (largeur et épaisseur notamment) comparables à celles des mèches plates .

Les lames métalliques selon la présente invention doivent être distinguées des fils, éventuellement métalliques, rassemblés de manière lâche, respectivement dans les différentes mèches plates du tube coaxial de renfort, ces fils pouvant être individuellement aplatis ou avoir une section quadrangulaire, comme montré par exemple dans le document US-A-4420018.

L'expérience a démontré que l'intégration de lames ou bandes métalliques, en lieu et place de mèches plates, dans l'entrelas du tube coaxial de renfort, confère à ce dernier une meilleure résistance à la déformation, tout en maintenant la flexibilité du conduit, et en améliorant les capacités d'amortissement et de filtration des émissions sonores ou vibrations, dues à la présence du tube coaxial de renfort.

Les lames métalliques du tube coaxial de renfort peuvent être en tout matériau approprié, tel qu'acier, acier inoxydable, cuivre ou alliage cuivreux, acier à ressort, etc.

La présente invention est maintenant décrite par référence au dessin annexé, dans lequel :
- la figure 1 représente, vu de l'extérieur, un conduit flexible renforcé selon l'invention .
- la figure 2 représente une vue en coupe longitudinale du conduit flexible renforcé selon figure 1 ;
- la figure 3 représente un détail, à échelle agrandie, du tube de renfort appartenant au conduit selon figure 1, montrant le mode d'entrecroisement des lames et des mèches plates le constituant ;
- la figure 4 représente, en coupe axiale, un autre conduit flexible renforcé selon l'invention ;
- la figure 5 représente un détail, à échelle agrandie, du tube coaxial de renfort appartenant au conduit selon figure 4, montrant le mode d'entrecroisement des mèches plates et des lames le constituant.

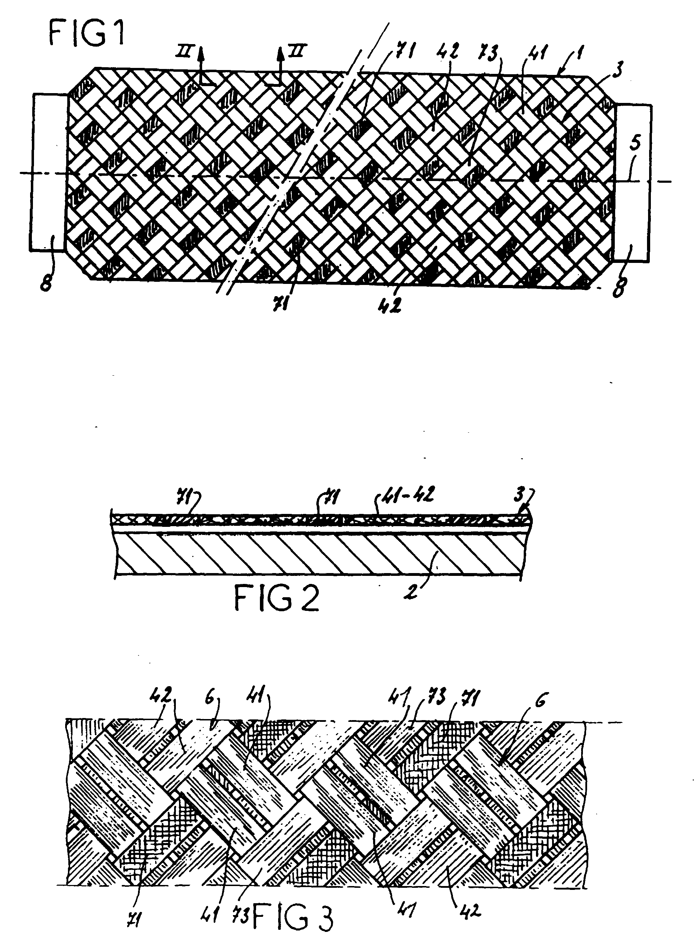

Conformément aux figures 1 et 2, est représenté un conduit flexible renforcé 1 comprenant un tuyau flexible 2 étanche, et un tube 3 coaxial de renfort, sous forme de tresse tubulaire, disposé à l'extérieur du tuyau flexible étanche, et à distance de ce dernier, sauf aux deux extrémités considérées ci-après.

Aux deux extrémités du conduit 1, le tuyau flexible étanche 2 et le tube coaxial 3 de renfort sont sertis par exemple sur deux embouts 8.

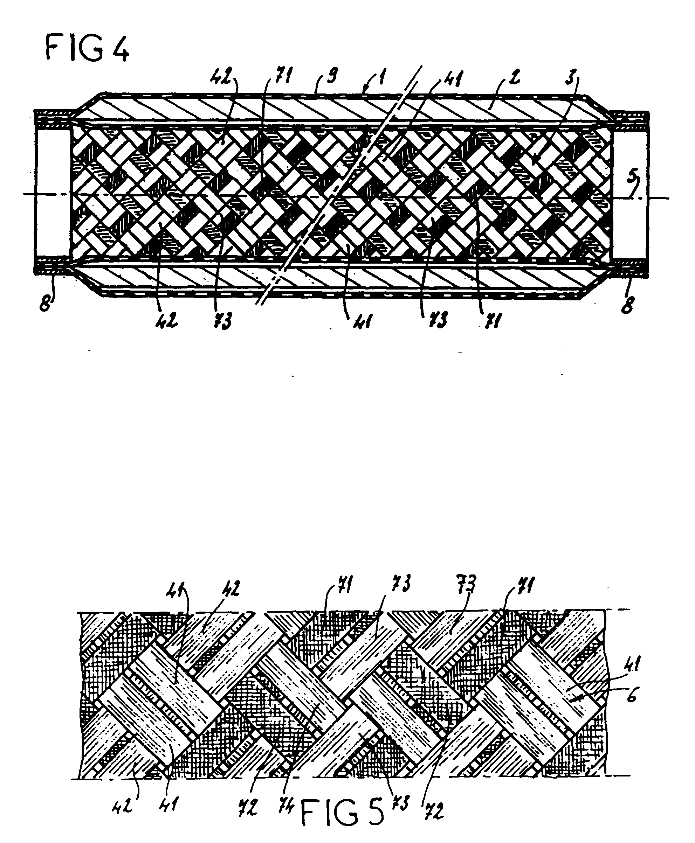

Comme le montrent les figures 1 et 3, le tube de renfort 3 comprend sous la forme d'un entrelas :
- une première série de paires de mèches plates 41 croisant successivement, du bas vers le haut de la figure 1, en dessous une paire de mèches plates 42 de la deuxième série, en dessus un couple d'une lame 71 et d'une mèche 73 de la troisième série, en dessous un couple d'une lame 71 et d'une mèche 73 de la troisième série, en dessus une paire de mèches plates 42 de la deuxième série, et ainsi de suite.
- une deuxième série de paires de mèches plates 42, croisant successivement du bas vers le haut de la figure 1, en dessous une paire de mèches plates 41 de la première série, en dessus une paire de mèches plates 41 de la première série, en dessous une paire de mèches plates 41 de la première série, et ainsi de suite.
- une troisième série de couples d'une mèche plate 73 et d'une lame métallique 71, croisant successivement du bas vers le haut de la figure 1, en dessous une paire de mèches plates 41 de la première série, en dessus une paire de mèches plates 41 de la première série, en dessous une paire de mèches plates 41 de la première série, et ainsi de suite.

Les mèches plates 41, 42 et 73 sont constituées par une pluralité de fils métalliques disposés côte à côte.

Comme le montre la figure 3, chacune des mèches plates 41, 42 et 73 est enroulée en hélice autour de l'axe 5 du tuyau 2 flexible et étanche, en déterminant un certain angle par rapport audit axe. La première série de couples de mèches plates 41 et la deuxième série de couples de mèches plates 42 s'entrecroisent selon un angle dit de tressage. La troisième série de couples de lames métalliques 71 et mèches 73 est enroulée parallèlement à la deuxième série de mèches plates 42.

Les mèches plates 41, 42 et 73 ont sensiblement la même largeur et la même épaisseur que les lames métalliques 71.

Le nombre de lames métalliques 71 tressées dans le tube de renfort 3 est inférieur au nombre total de mèches plates 41 et 42 tressées dans le même tube.

Comme le montrent les figures 4 et 5, le tube de renfort 3 comprend sous la forme d'un entrelas :
- une première série de paires de mèches plates 41, croisant successivement du bas vers le haut de la figure 4, en dessous une paire de mèches plates 42 de la deuxième série, en dessus un couple d'une lame métallique 71 et d'une mèche plate 73, de la troisième série, en dessous un couple d'une mèche plate 73 et d'une lame métallique 71 de la troisième série, en dessus une paire de mèches plates 42 de la deuxième série, et ainsi de suite.
- une deuxième série de paires de mèches plates 42, croisant successivement, du bas vers le haut de la figure 4, en dessous une paire de mèches plates 41 de la première série, en dessus un couple d'une lame métallique 72 et d'une mèche plate 74 de la quatrième série, en dessous un couple d'une mèche plate 74 et d'une lame métallique 72 de la quatrième série, en dessus une paire de mèches plates 41 de la première série, et ainsi de suite
- une troisième série de couples d'une lame métallique 71 et d'une mèche 73, croisant successivement, du bas vers le haut de la figure 4, en dessus une paire de mèches plates 41 de la première série, en dessous un couple d'une lame métallique 72 et d'une mèche plate 74 de la quatrième série, en dessus un couple d'une mèche plate 74 et d'une lame métallique 72 de la quatrième série, en dessous une paire de mèches plates 41 de la première série, et ainsi de suite
- une quatrième série de couples d'une lame métallique 72 et d'une mèche 74, croisant successivement du bas vers le haut de la figure 4, en dessous une paire de mèches plates 42 de la deuxième série, en dessus un couple d'une lame métallique 71 et d'une mèche 73 de la troisième série, en dessous un couple d'une mèche 73 et d'une lame métallique 71 de la troisième série, et en dessus une paire de mèches plates 42 de la deuxième série.

On notera que selon les figures 4 et 5, et pour les troisième et quatrième séries, du bas vers le haut, deux lames métallique 71 ou 72 encadrent deux mèches 73 ou 74 consécutives.

Le conduit flexible représenté aux figures 4 et 5, diffère par ailleurs de celui représenté par référence aux figures 1 à 3, par les caractéristiques suivantes :
- le tube de renfort 3 est disposé à l'intérieur du tuyau flexible 2 ; et un autre tube 9 de renfort est disposé à l'extérieur du tuyau flexible 2
- l'entrelas du tube 3 comprend, d'une part une première série de mèches plates 41 entrecroisées avec une deuxième série de mèches plates 42, et d'autre part une première série de lames 71 enroulées parallèlement à l'une des séries de mèches plates 41, et entrecroisées avec une deuxième série de lames 72, enroulées parallèlement à l'autre des séries de mèches plates 42 ; cette disposition permet de solidariser si nécessaire les lames 71 et 72, à leurs intersections, ou à certaines d'entre elles.

De manière à mettre en évidence les performances d'un conduit flexible renforcé selon l'invention, par rapport à un conduit flexible renforcé traditionnel, et en vue d'une utilisation dudit conduit pour une ligne d'échappement des gaz de combustion d'un moteur à explosion d'un véhicule automobile, la procédure expérimentale suivante a été mise en oeuvre :

### 1) Essai de traction-compression

Ces essais sont effectués sur le tube coaxial de renfort uniquement, selon la procédure suivante

### 1.1) Définition des éprouvettes

### a) tube de renfort de référence

Il comporte 48 mèches plates ou fuseaux, constituées chacune de dix fils de diamètre 0,5 mm, tressées avec un pas de tressage de 188 mm, un angle de tressage de 47,8° et une compacité de 0,86

Les fils des mèches sont en acier inoxydable 304, ayant une limite à la rupture de 70 à 80 da N/mm²

### b) tube de renfort selon l'invention

Par rapport au tube défini précédemment, 4 mèches plates ou fuseaux ont été remplacées par 4 lames métalliques entrecroisées entre elles

Chaque lame métallique, ayant une largeur de 3,2 mm et une épaisseur de 0,5 mm, est obtenue en acier inoxydable 302, ayant une limite à la rupture de 186 da N/mm², et un allongement à la rupture de 3,1 %

### c) éprouvettes

Le tube de référence, et le tube de renfort sont coupés selon une longueur de 200 mm, et sertis à chaque extrémité entre une bague intérieure et une bague extérieure.

On obtient ainsi une éprouvette de référence et une éprouvette selon l'invention.

### 1.2) Traitement préalable des éprouvettes

Elles sont dégraissées puis étuvées. Ensuite elles sont rodées sur une machine de fatigue axiale, avec laquelle :
- on maintient une extrémité fixe, et on déplace l'autre extrémité de ± 21 mm, de part et d'autre de l'axe du tube
- avec une fréquence de 580 cycles/mn et en effectuant 3000 cycles

### 1.3) Essais de traction-compression

Avec une vitesse de sollicitation de 20 mm/mn, les deux éprouvettes sont soumises au cycle de traction-compression suivant :
* compression à - 20 mm
* traction à + 20 mm
* compression à - 20 mm
* traction à + 20 mm
* compression à - 20 mm
* traction à + 20 mm
* retour à allongement nul

### 1.4) Résultats

Pour un étirement de 20 mm, l'effort maximum obtenu en traction est de 117 N pour l'éprouvette selon l'invention, et de 80 N pour l'éprouvette de référence, soit un gain de 46 % en faveur de l'invention

Pour une compression de 20 mm, l'effort maximum obtenu est pratiquement le même, à 5 % près, pour les deux éprouvettes.

Les énergies de frottement emmagasinées lors d'un cycle de traction-compression sont de 1998 N.mm pour l'éprouvette selon l'invention, et 1425 N.mm pour l'éprouvette de référence, soit un gain de 40 % en faveur de l'invention

### 1.5) Commentaires.

Compte tenu de l'énergie de frottement précédemment définie, un tube de renfort selon l'invention, a des propriétés d'amortissement supérieures à celles d'un tube de renfort traditionnel.

### 2) Mesures vibratoires sur véhicule automobile

### 2.1) Définition des essais

Un premier conduit flexible renforcé comporte un tuyau métallique onduleux, un tube externe constitué par une tresse métallique traditionnelle, et un tube interne de renfort constitué par un tube métallique agrafé.

Un deuxième conduit flexible renforcé ne diffère du premier conduit que par le tube interne de renfort qui est constitué selon les indications du paragraphe 1.1.b, et par conséquent selon l'invention.

Les deux conduits flexibles sont testés successivement sur une ligne d'échappement d'un véhicule automobile.

Le niveau de vibration à une extrémité de chaque conduit, opposée au moteur, est mesuré avec un accéléromètre, en fonction du régime du moteur.

### 2.2) Résultats

A faible régime (inférieur à 1500 tr/m), les deux conduits flexibles amortissent sensiblement de la même manière. Aux régimes plus élevés, l'accélération mesurée est inférieure à 80 dB pour le deuxième conduit, alors qu'elle dépasse 85 dB avec le premier conduit.

### 2.3) Commentaire

Dans cette application particulière, mais non exclusive, de la présente invention, cette dernière permet de limiter de manière importante, les vibrations transmises par le moteur à la ligne d'échappement du véhicule automobile, dans une plage de régimes importante.

Et l'invention permet de maintenir au cours du temps les propriétés amortissantes du deuxième conduit flexible, par rapport au premier conduit flexible, pour lequel le jeu entre les agrafes du tube interne augmente au cours du temps, en raison de l'usure.

Bien entendu, en fonction des performances recherchées, notamment en termes d'amortissement, l'entrecroisement, le nombre et la constitution des mèches plates et des lames peuvent être variés et choisis de manière appropriée.

## Revendications

1. Conduit (1) flexible renforcé, comprenant un tuyau (2) flexible étanche et un tube (3) coaxial de renfort comportant un entrelas de mèches plates (41, 42) enroulées en hélice autour de l'axe (5) du tuyau, chaque mèche plate comprenant une pluralité de fils (6), notamment métalliques, rassemblés, le tube de renfort étant assemblé par rapport au tuyau flexible étanche, de manière à disposer d'une liberté de déplacement radial par rapport audit tuyau **caractérisé en ce que** l'entrelas du tube coaxial (3) de renfort comprend des lames métalliques (71, 72) substituées à une partie des mèches plates, distinctes des fils desdites mèches plates, enroulées individuellement autour de l'axe du tuyau, entrecroisées et tressées avec les mèches plates restantes.

2. Conduit selon la revendication 1, caractérisé en ce que les mèches plates (41, 42) ont sensiblement la même largeur que les lames métalliques (71, 72).

3. Conduit selon la revendication 1 caractérisée en ce que les mèches plates (41, 42) ont sensiblement la même épaisseur que les lames métalliques (71, 72)

4. Conduit selon la revendication 1, caractérisé en ce que le nombre de lames métalliques tressées dans le tube de renfort est inférieur au nombre de mèches plates tressées dans ledit tube.

5. Conduit selon la revendication 1, caractérisé en ce que l'entrelas du tube de renfort (3) comprend :
- une première série de mèches plates (41) entrecroisées avec une deuxième série de mèches plates (42)
- une première série de lames (71) enroulées parallèlement à l'une des séries de mèches plates (42), et entrecroisées avec une deuxième série de lames (72), enroulées parallèlement à l'autre des séries de mèches plates (41).

6. Conduit selon la revendication 1, caractérisé en ce qu'à au moins une extrémité dudit conduit le tuyau flexible (2) et le tube coaxial (3) sont sertis sur un embout (8).

7. Conduit selon la revendication 1, caractérisé en ce que le tube de renfort (3) est disposé à l'extérieur du tuyau flexible (2).

8. Conduit selon la revendication 1, caractérisé en ce que le tube de renfort (3) est disposé à l'intérieur du tuyau flexible (2).

9. Conduit selon la revendication 8, caractérisé en ce qu'un autre tube de renfort (9) est disposé à l'extérieur du tuyau flexible (2).

## Patentansprüche

1. Flexible verstärkte Leitung (1) mit einem flexiblen dichten Schlauch (2) und einer koaxialen Verstärkungsröhre (3) , die ein Flechtwerk an Flachdochten (41, 42) aufweist, die schraubenlinienartig um die Achse (5) des Schlauchs gewickelt sind, wobei jeder Flachdocht eine Vielzahl an zusammengefügten, insbesondere metallischen Fäden (6) umfaßt, und wobei die Verstärkungsröhre bezüglich des flexiblen dichten Schlauchs derart zusammengesetzt ist, daß sie bezüglich des Schlauchs über eine radiale Bewegungsfreiheit verfügt, dadurch gekennzeichnet, daß das Flechtwerk der koaxialen Verstärkungsröhre (3) metallische Streifen (71, 72) aufweist, die zum Teil die Flachdochte ersetzen und die von den Fäden der Flachdochte verschieden sind, und die einzeln um die Achse des Schlauchs gewickelt sind, wobei sie sich mit den restlichen Flachdochten überkreuzen und mit diesen verflochten sind.

2. Leitung nach Anspruch 1, dadurch gekennzeichnet, daß die Flachdochte (41, 42) etwa die gleiche Breite wie die metallischen Streifen (71, 72) aufweisen.

3. Leitung nach Anspruch 1, dadurch gekennzeichnet, daß die Flachdochte (41, 42) etwa die gleiche Dicke wie die metallischen Streifen (71, 72) aufweisen.

4. Leitung nach Anspruch 1, dadurch gekennzeichnet, daß die Anzahl an in der Verstärkungsröhre eingeflochtenen metallischen Streifen kleiner als die Anzahl an in der Röhre eingeflochtenen Flachdochten ist.

5. Leitung nach Anspruch 1, dadurch gekennzeichnet, daß das Flechtwerk der Verstärkungsröhre (3):
- eine erste Serie an Flachdochten (41) aufweist, die sich mit einer zweiten Serie an Flachdochten (42) überschneidet,
- eine erste Serie an Streifen (71) aufweist, die parallel zu einer der Serien an Flachdochten (42) gewickelt ist und die sich mit der zweiten Serie an Streifen (72) überschneidet, welche parallel zu der weiteren Serie an Flachdochten (41) gewickelt ist.

6. Leitung nach Anspruch 1, dadurch gekennzeichnet, daß der flexible Schlauch (2) und die koaxiale Röhre (3) zumindest an einem äußersten Ende der Leitung an einem Ansatzstück (8) gebördelt sind.

7. Leitung nach Anspruch 1, dadurch gekennzeichnet, daß die Verstärkungsröhre (3) an der Außenseite des flexiblen Schlauchs (2) vorgesehen ist.

8. Leitung nach Anspruch 1, dadurch gekennzeichnet, daß die Verstärkungsröhre (3) an der Innenseite des flexiblen Schlauchs (2) vorgesehen ist.

9. Leitung nach Anspruch 8, dadurch gekennzeichnet, daß eine weitere Verstärkungsröhre (9) an der Außenseite des flexiblen Schlauchs (2) vorgesehen ist.

## Claims

1. Reinforced flexible pipe (1), comprising an impermeable hose (2) and a coaxial reinforcement tube (3) composed of an interlacement of flat rovings (41, 42) helically wound about the axis (5) of the hose, each flat roving comprising a plurality of filaments (6), especially wires, combined together, the reinforcement tube being assembled, with respect to the impermeable hose, so as to have freedom of radial movement with respect to the said hose, **characterized in that** the interlacement of the coaxial reinforcement tube (3) comprises metal tapes (71, 72) substituted for part of the flat rovings, distinct from the filaments of the said flat rovings, wound individually around the axis of the hose, interlaced and braided with the remaining flat rovings.

2. Pipe according to Claim 1, characterized in that the flat rovings (41, 42) have substantially the same width as the metal tapes (71, 72).

3. Pipe according to Claim 1, characterized in that the flat rovings (41, 42) have substantially the same thickness as the metal tapes (71, 72).

4. Pipe according to Claim 1, characterized in that the number of metal tapes braided into the reinforcement tube is less than the number of flat rovings braided into the said tube.

5. Pipe according to Claim 1, characterized in that the interlacement of the reinforcement tube (3) comprises:
- a first series of flat rovings (41) interlaced with a second series of flat rovings (42)
- a first series of tapes (71) wound parallel to one of the series of flat rovings (42) and interlaced with a second series of tapes (72), wound parallel to the other of the series of flat rovings (41).

6. Pipe according to Claim 1, characterized in that at least one end of the said pipe, the hose (2) and the coaxial tube (3) are crimped onto an end fitting (8).

7. Pipe according to Claim 1, characterized in that the reinforcement tube (3) is arranged on the outside of the hose (2).

8. Pipe according to Claim 1, characterized in that the reinforcement tube (3) is arranged on the inside of the hose (2).

9. Pipe according to Claim 8, characterized in that another reinforcement tube (9) is arranged on the outside of the hose (2).
